# EUROPÄISCHE PATENTSCHRIFT

(11) **EP 0 748 428 B1**
(45) Veröffentlichungstag und Bekanntmachung des Hinweises auf die Patenterteilung: **29.07.1998**
(21) Anmeldenummer: 95912262.3
(22) Anmeldetag: 22.03.1995
(51) Int. Cl.: F16L 3/10

(54) **ROHRBEFESTIGUNGSVORRICHTUNG**
PIPE-SECURING DEVICE
DISPOSITIF DE FIXATION D'UN TUBE

(30) Priorität: 22.03.1994 DE 4409765
(43) Veröffentlichungstag der Anmeldung: 18.12.1996
(73) Patentinhaber: WEMEFA HORST CHRISTOPEIT GmbH, D-42555 Velbert (DE)
(72) Erfinder: HEIER, Thomas, D-97076 Würzburg (DE)
(74) Vertreter: Stratmann, Ernst, Dr.-Ing.
(86) Internationale Anmeldenummer: EP9501070
(87) Internationale Veröffentlichungsnummer: WO9525922

(56) Entgegenhaltungen:
- EP-A- 0 567 821
- CH-A- 662 631
- DE-U- 8 322 502
- DE-U- 9 002 663

## Beschreibung

### TECHNISCHES GEBIET

Die Erfindung betrifft eine Rohrbefestigungsvorrichtung, bestehend aus einem Sattel, einer Schelle und Befestigungsbolzen, wobei die Schelle mit Befestigungsflanschen versehen ist, von denen einer einen in einem Flanschseitenrand mündenden Einschnitt zur Aufnahme des Schaftes eines in den Sattel und die Schelle einschraubbaren Befestigungsbolzens aufweist.

### STAND DER TECHNIK

Eine derartige Befestigungsvorrichtung ist beispielsweise aus dem Gebrauchsmuster G 83 22 502.1 bereits bekannt. Die bekannte Rohrschelle arbeitet mit einem an jedem Flansch angeordneten, in einem Flanschseitenrand mündenden Einschnitt, um so die Möglichkeit zu haben, erst die Befestigungsbolzen in den Sattel anzuordnen, bevor das Rohr oder die Schelle angeordnet werden. Besonders bei langen Rohren und einer entsprechend großen Zahl von Befestigungspunkten wird dies als großer Vorteil angesehen. Als Nachteil wird genannt, daß die Schelle, nachdem diese mit ihren Flanschen unterhalb der Köpfe der vorläufig angeordneten Befestigungsbolzen eingeschoben ist, beim Andrehen der Bolzen die Neigung hat, sich in die Einschnittslängsrichtung gegenüber dem Befestigungsbolzen zu verschieben, so daß die Schelle während des Festdrehens des Bolzens unterstützt werden muß. Um diesen Nachteil zu beseitigen, wird bei der bekannten Einrichtung der Flansch in der Nähe des offenen Endes des Einschnitts mit einer von dem Sattel abgekehrten Erhöhung versehen, welcher bei Anlage des Bolzenkopfes an den Flansch einen Anschlag für den Bolzenkopf bildet. Nachteilig ist, daß dadurch, daß beide Enden der Schelle mit Einschnitten versehen sind, die Stabilität beeinträchtigt wird. Durch die vorspringenden Erhöhungen in der Nähe des offenen Endes des Einschnittes wird eine gegenseitige Verschiebung der Schelle von dem Schellensattel zwar verhindert, so daß ein Aufspringen bei axialer Rohrverschiebung im geschlossenen Zustand nicht und im geöffneten Zustand nur bei zu weiter Schraubenherausdrehung möglich wird, doch ist die Sicherung gegen Aufspringen erkauft durch eine verringerte Stabilität gegenüber einer solchen Schelle, die keine zwei seitlichen Einschnitte pro Schelle aufweist.

Aufgabe der Erfindung ist es, eine Ausführungsform einer Schelle der eingangs genannten Art zu schaffen, bei der die Stabilität erhöht wird, trotz Sicherung gegenüber seitlichem Aufspringen bei axialer Rohrverschiebung im offenen wie auch im geschlossenen Zustand, wobei auch der Nachteil von Vorsprüngen in Einschnittnähe zum Bilden der Anschlagflächen vermieden werden kann, welche Vorsprünge zum einen umständlich herzustellen sind, zum anderen die Gefahr von Verletzungen vergrößert und deren Zahl daher möglichst gering gehalten oder auf Null gebracht werden sollte.

Gelöst wird die Aufgabe dadurch, daß der andere Befestigungsflansch der Schelle ein erstes Langloch aufweist, daß der Einschnitt ein einseitiges offenes zweites Langloch bildet, dessen Ausrichtung derart schräg zur Achse der Schelle bzw. des zu haltenden Rohrs liegt, daß die Mitte der Einschnittsöffnung von der Schellen- bzw. Rohrachse oder einer dazu parallelen Linie durch das erste Langloch einen Abstand aufweist, der um ein Maß A größer ist als der entsprechende Abstand zur Mitte des Endes des Einschnitts, das gemäß einer Weiterbildung halbkreisförmig ist. Besonders günstig ist, wenn dieses Maß A annähernd die Differenz zwischen den Radien des Kopfes und des Schaftes des Befestigungsbolzens darstellt. Da üblicherweise der Kopfradius etwa doppelt so groß ist wie der Schaftradius, ergibt sich, daß dann das Maß A die halbe Breite des Langlochs erreicht bzw. gleich dem Radius des Schaftes des Befestigunqsbolzens ist.

Durch diese Maßnahme bildet der schrägliegende Einschnitt eine vorspringende, die Befestigungsschraube in dem Einschnitt haltende Kante, die in der Ebene des Flansches liegt, also keinen vorspringenden Teil verwendet. Es ist günstig, wenn die Schelle in der Nähe des Kopfes (einer der) Befestigungsbolzen einen Anschlag bildet, der eine Verschiebung der Schelle bezüglich des Bolzens in Richtung eines Langlochs bei angezogener Schraube verhindert. Insbesondere kann der Vorsprung von dem Eckbereich zwischen Flansch und Schellenwand bzw. von einem von diesem getragenen sickenförmigen Längsprofil gebildet sein. Es kann auch günstig sein, zusätzlich dem Flansch in der Nähe des offenen Endes des Einschnittes eine von der Unterlage abgekantete Erhöhung zu geben, welche beim Anliegen des Bolzenkopfes am Flansch auch einen Anschlag für den Bolzenkopf bildet, ähnlich wie beim Stand der Technik. Er hat jedoch hier mehr die Funktion, die Befestigungsschraube im Durchbruch zu zentrieren.

Für die erfindungsgemäße Rohrbefestigung ist es günstig, wenn die Schelle besonders stabil und biegesteif ist. Die Steifigkeit kann die Schelle dadurch erhalten, daß sie eine im Querschnitt sickenförmiqe Längsprägung erhält.

Günstig ist auch eine Weiterbildung, bei der die Schelle in der Nähe des Kopfes des Befestigungsbolzens, der durch einen Durchbruch im (vom Flansch mit Einschnitt entfernten) anderen Befestigungsflansch hindurchgeführt ist, einen Anschlag derart bildet, daß eine Verschiebung der Schelle bezüglich des Befestigungsbolzens, der durch den Einschnitt geführt ist, in Richtung dieses Einschnitts (bei leicht angezogener Schraube im Gegenflansch) verhindert wird.

Dieser Anschlag kann von einer Herausdrückung im Bereich der Auflagefläche des Kopfes des Befestigungsbolzens gebildet sein.

Noch günstiger ist es, wenn zwei Herausdrückungen den Anschlag bilden, die symmetrisch zum Flanschdurchbruch für den Bolzen angeordnet sind.

### KURZE BESCHREIBUNG DER ERFINDUNG

Die Erfindung wird nachfolgend anhand von Ausführungsbeispielen näher erläutert, die in den Zeichnungen dargestellt sind.

Es zeigt:
- Fig. 1: in einer Seitenansicht eine erfindungsgemäß aufgebaute Rohrbefestigungsvorrichtung;
- Fig. 2: eine Draufsicht auf die auseinandergestreckte Schelle der Rohrbefestigungsvorrichtung gemäß Fig. 1;
- Fig. 3: eine Draufsicht auf den auseinandergezogenen Sattel der Rohrbefestigungsvorrichtung gemäß Fig. 1;
- Fig. 4: eine Ansicht von unten auf die Befestigungsvorrichtung gemäß Fig. 1 während des Schließvorganges;
- Fig. 5: eine ähnliche Ansicht wie Fig. 4 nach dem Schließvorgang;
- Fig. 6: eine vergrößerte Teilansicht auf den die Einschnittöffnung aufweisenden Endbereich der Schelle;
- Fig. 7: eine vergrößerte Schnittansicht durch einen Befestigungsbolzen;
- Fig. 8: die Seitenansicht einer Schelle mit als Anschlag dienender Herausdrückung; und
- Fig. 9: eine Draufsicht auf die Schelle der Fig. 8.

### BESTE WEGE DER AUSFÜHRUNG DER ERFINDUNG

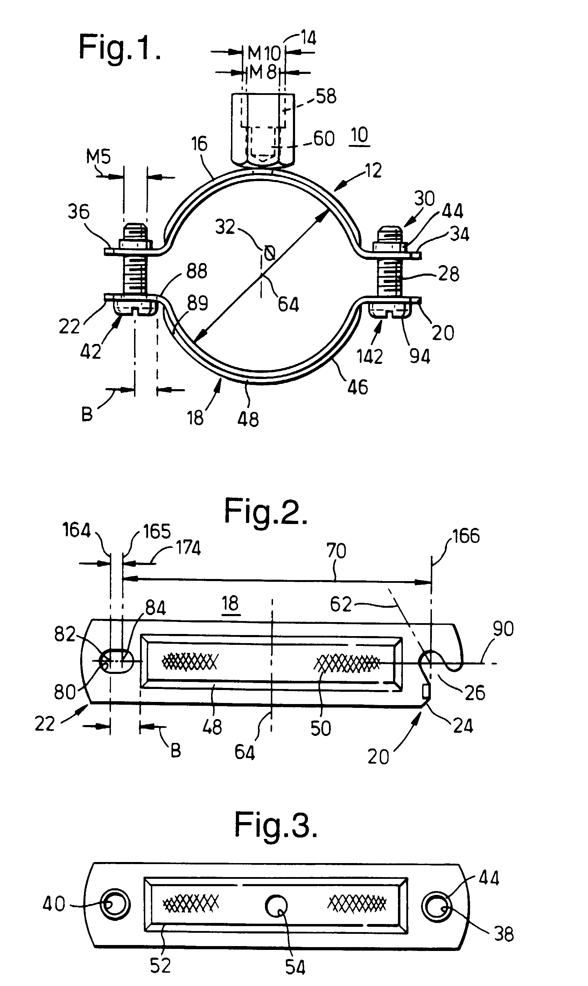

In Fig. 1 ist in einer Seitenansicht eine erfindungsgemäß ausgestaltete Rohrbefestigungsvorrichtung 10 zu erkennen, bestehend aus einer Unterlage 12, nämlich einen mittels Bolzen M10 oder M8, Bezugszahl 14, in einer Wand oder einer sonstigen Befestigungsfläche befestigbaren Sattel 16 und einer mit Befestigungsflanschen 20, 22 versehenen Schelle 18 wobei der eine Befestigungsflansch 20 einen in einem Flanschseitenrand 24 mündenden Einschnitt 26 zur Aufnahme des Schaftes 28 eines in die Unterlage einschraubbaren Befestigungsbolzens 30 aufweist. Wie die Fig. 1 erkennen läßt, bilden die Schelle 18 und die Unterlage 12 einen kreisförmigen Umschließungsring für beispielsweise ein Rohr oder Kabel mit einem Außendurchmesser 32, wobei hier die Unterlage 12 in Form eines Sattels 16 eine ähnliche Ausbildung hat, wie die Schelle 18, nämlich mit zwei Befestigungsflanschen 34, 36 versehen ist, in die jeweils eine Gewindebohrung 38, 40 eingebracht ist, zur Aufnahme eines Befestigungsbolzen 30 bzw. 42. Zur Vergrößerung der Länge des Gewindes kann die Gewindebohrung durch Herausdrücken von Material während eines Stanzvorganges, siehe Materialrand 44, verstärkt sein.

Zur Erhöhung der Steifigkeit der vorzugsweise aus Blech gestanzten Schelle 18 ist diese im Bereich des das Rohr umschließenden Teils 46 mit einer im Querschnitt sickenförmigen Längsprägung 48 versehen, die gemäß Fig. 2 zudem so gestaltet werden kann, daß sie einen Kennzeichnungsbereich 50 rahmenartig umschließt, welcher Kennzeichnungsbereich beispielsweise eine Kennzeichnung oder ein Schild seitlich geschützt aufnehmen kann, das z. B. einen Hinweis auf den Zweck des gehaltenen Rohres gibt.

Eine entsprechende Sicke 52 kann auch der Sattel 16 aufweisen, wie die Fig. 3 erkennen läßt, wo zudem ein Durchbruch 54 mittig vom Sattel zu erkennen ist, um einen Befestigungsbolzen oder, wie in Fig. 1 zu erkennen, eine auf einem Befestigungsbolzen aufschraubbares Bauteil, wie Hutmutter 56 mit zwei Gewindebereichen 58, 60 aufbringen zu können, beispielsweise durch Punktverschweißung oder durch Vernietung. In dem Gewindebereich 58 mit beispielsweise einem Gewinde M10 kann somit ein Bolzen M10 eingeschraubt werden, bei Bedarf aber auch in den dahinterliegenden Gewindebereich 60 mit beispielsweise einem Gewinde M8 ein Bolzen mit dem Gewinde M8, so daß eine alternative Befestigung mittels M10- oder M8-Schraubbolzen möglich ist.

Wie Fig. 2 erkennen läßt, ist für den Befestigungsbolzen 42 im Befestigungsflansch 22 der Schelle 18 ein Durchbruch 80 vorgesehen, der die Form eines Langloches hat, mit zwei halbkreisförmigen Endbereichen, deren Halbkreisradien an den Radius des aufzunehmenden Schaftes des Bolzens 42 angepaßt sind und durch welche Halbkreismittelpunkte 82, 84 zwei zur Schelle bzw. Rohrachse 64 parallele Linien 164 verlaufen, die voneinander einen Abstand 174 aufweisen, um den sich somit der Schaft des Bolzens 42 in dem Langloch bewegen kann.

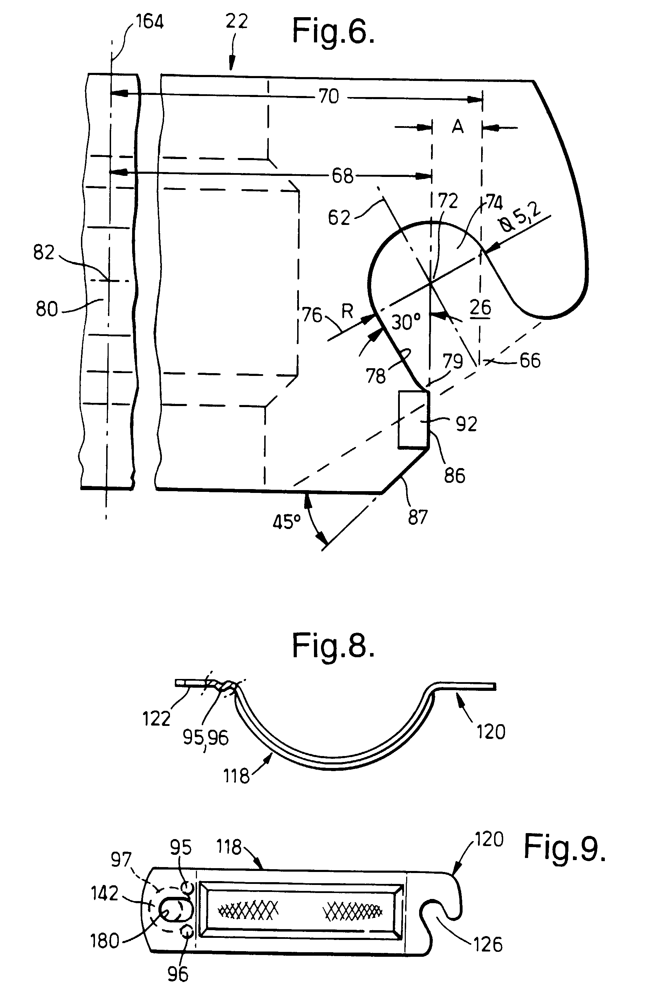

Wie die Fig. 2 gleichfalls erkennen läßt, noch deutlicher aber in Fig. 6 dargestellt ist, bildet der Einschnitt 26 ein einseitig offenes Langloch, dessen Ausrichtung derart schräg zur Schellenachse 64 bzw. auch zur Linie 164 bzw. 165 liegt, daß die Mitte des Öffnungsbereichs des Einschnitts, schematisch mit 66 bezeichnet, von der Linie 164 bzw. 165 des anderen Endes der Schelle einen Abstand 70 aufweist, der um ein Maß A größer ist als der Abstand des Mittelpunkts des halbkreisförmigen Endes 74 des Einschnitts, bezeichnet mit der Bezugszahl 72, welcher Abstand mit 68 bezeichnet ist. Um annähernd dieses Maß bewegt sich ein im Einschnitt 26 in seiner Endstellung (koaxial zum Punkt 72) liegender Schaft eines Schraubbolzens, nicht dargestellt, wenn dieser aus dem Einschnitt 26 infolge dessen schräger Anordnung herausgleitet. Diese Gleitfläche wird beispielsweise definiert durch die Kante 78, die in einem bestimmten Winkel zur Schellenachse 64 bzw. 164 liegt, hier beispielsweise in einem Winkel von 30°. Beim Herausgleiten aus dem Einschnitt 26 wandert somit der Schaft eines Schraubbolzens entlang dieser Schrägfläche 78, so daß der Bolzenmittelpunkt, der zunächst nur die Entfernung 68 von der Linie 164 hatte, bei Erreichen des unteren Endes 79 der Schrägfläche den Punkt 66 erreicht, der die Entfernung 70 von der Linie 164 aufweist, also um einen Wert A verschoben ist. Beim weiteren Herausgleiten bewegt sich dann der Bolzenschaft entlang einer parallel zur Linie 164 liegenden Kante 86, so daß sich die Entfernung des Bolzens von der Linie 164 jetzt nicht mehr ändert, um schließlich an der zurückspringenden Schrägfläche 87 ganz freizukommen. Die über die Entfernung A auftretende Verschiebung des Befestigungsbolzens bei seiner Bewegung entlang dem schrägliegenden Einschnitt 26 führt am anderen Ende der Schelle zu einer Verschiebung der Schelle bezüglich des dortigen Bolzens, und damit des Bolzens bezüglich des Langloches 80 von zunächst in einer Stellung, in der sich der dortige Bolzen mit seinem Achsenmittelpunkt auf dem Punkt 82 befindet, bis zu einer Stellung, wo dieser Bolzenmittelpunkt bei der Stellung 84 liegt.

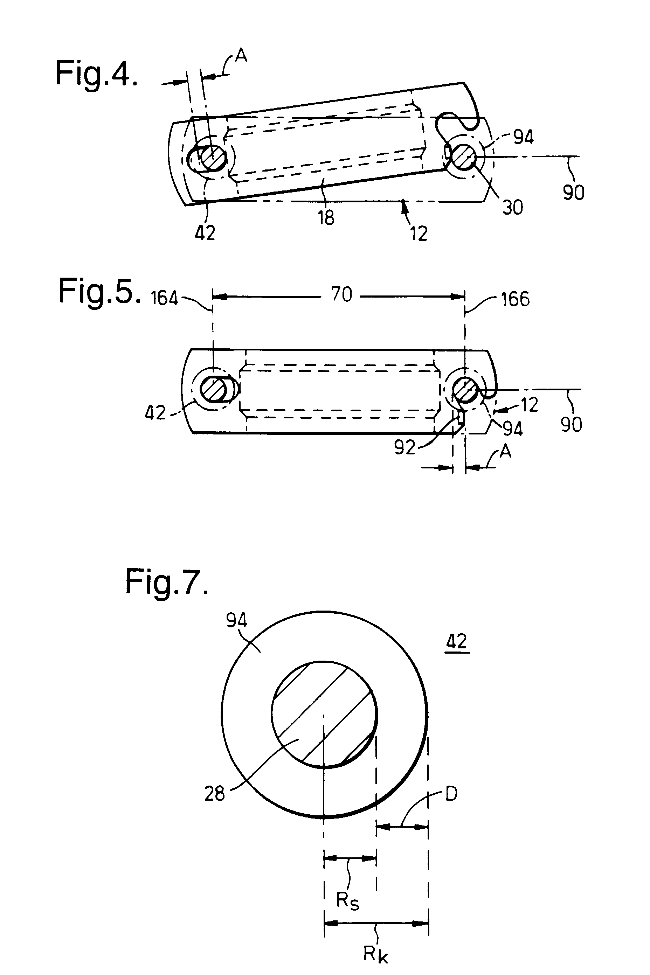

Das bedeutet, daß die Entfernung zwischen den beiden Linien 164, 165 annähernd gleich dem Maß A sein sollte. Es hat sich als sinnvoll erwiesen, dieses Maß A annähernd gleich der Differenz D zwischen den Radien R_{K} und R_{S} (Fig. 7) des Kopfes 94 und des Schaftes 28 des Befestigungsbolzens 42 zu machen. Meist ist R_{K}≈2 R_{S} und damit wird das Maß A annähernd gleich dem Radius R_{S} des Befestigungsbolzens und damit wiederum annährend gleich der halben Breite des Langloches 80 bzw. 26. Ein Herausgleiten des Bolzens bei gelockerter Befestigungsschraube 30 und relativ steifer Schelle ist daher nur unter der Voraussetzung möglich, daß sich der Befestigungsbolzen 42 in dem Langloch 80 zum anderen Schellenende verschieben kann, wie das in den Fig. 4 und 5 dargestellt ist. Unterdrückt man diese Verschiebemöglichkeit, ergibt dies gleichzeitig eine Sicherung gegen ein ungewünschtes Öffnen der Schelle infolge beispielsweise Axialverschiebungen des von der Schelle gehaltenen Rohres.

Verhindern läßt sich eine Verschiebung des Bolzens 42 in dem Langloch 80 vorzugsweise dadurch, daß das Langloch 80 und zwar insbesondere sein Halbkreismittelpunkt 82 eine ganz bestimmte Entfernung B zum Biegepunkt 88 aufweist, an dem der Flansch 22 in die das Rohr umgreifende Schellenrundung übergeht. Speziell ist die Entfernung repräsentiert durch die Oberfläche der an dieser Stelle beginnenden Längsprägung 48. Diese Entfernung B sollte möglichst genau gleich dem Radius des Kopfes des Schraubbolzens 42 sein, denn dann legt sich dieser in angezogenem Zustand mit seinem Kopfrand an die Rohrschelle bzw. an das sickenförmige Längsprofil 48 am Punkt 88 an, wie das die Fig. 1 erkennen läßt. Bei angezogener Schraube kann daher diese in dem Langloch 80 nicht aus der Stellung mit dem Mittelpunkt am Punkt 82 herausgleiten in den mit dem Mittelpunkt 84 gelangen. Das bedeutet, daß die Schelle auch an ihrem anderen Ende sich nicht in Richtung der Verbindungslinie 90 zwischen den beiden Befestigungsbolzen 30, 42 bewegen kann, wodurch der Bolzenschaft des Bolzens 30 daran gehindert ist, auf der Schrägfläche 78 aufzugleiten und aus dem Einschnitt 26 herauszugelangen, selbst dann, wenn aufgrund von Bewegungen in Richtung der Schellenachse 64 das Rohr versuchen sollte, die Schelle 18 aus der in Fig. 5 dargestellten Position herauszudrücken und in die in Fig. 4 dargestellte Position zu bringen. Diese Position wird erst dann möglich, wenn der Befestigungsbolzen 42 um ein bestimmtes Maß aus seiner angezogenen Stellung herausgeschraubt wird, wodurch der Kopf aus dem Eckbereich 88 freikommt und in den Bereich 89 gelangt, wo das sickenförmige Profil die Schelle 18 bezüglich der Achse der Befestigungsschraube 42 ein Stück zurückweicht und so Platz schafft, um eine Bewegung des Schaftes des Bolzens vom Mittelpunkt 82 zum Mittelpunkt 84 zu ermöglichen, in etwa um das Maß A in Fig. 6. Dadurch kann die Schelle gemäß Fig. 4 so weit nach oben geschwenkt werden, daß der Einschnitt 26 der Schelle 18 vom Schaft des Bolzens 30 freikommt.

Aus Festigkeitsgründen ist es sinnvoll, wenn in dieser Position das sickenförmige Längsprofil 48 den Schaft des Befestigungsbolzens 42 gerade noch nicht erreicht oder gerade erreicht, wie es die Fig. 4 auch andeutet. Dadurch kann der Flansch relativ kurz gehalten werden, so daß die Biegekräfte, die auf ihn einwirken, klein bleiben.

Wie ersichtlich, kommt die beschriebene Sicherung gegen ein ungewolltes Öffnen der Schelle ohne einen besonderen nach oben vorspringenden Nasenbereich oder dergleichen, wie er beim Stand der Technik vorhanden ist, aus.

Gleichwohl kann eine derartige Nase zusätzlich vorgesehen werden, beispielsweise in Form der im Bereich der Kante 86 angedeuteten Umbiegung 92, die eine zusätzliche Sicherung insofern darstellt, als sie sich bei geschlossener Schelle und angezogenen Befestigungsbolzen gegen den Kopf 94 legt, der in Fig. 5 gestrichelt dargestellt ist. Aufgrund der Schrägung erqibt sich dabei noch gegenüber dem Stand der Technik der zusätzliche Vorteil, daß die Nase 92 annähernd in Richtung der Schellenachse, also parallel zur Linie 166 liegt, so daß keine Drehkraft auf den Kopf der Schraube 94 durch diese Nase 92 ausgeübt wird, so daß auch bei Rüttelbelastung nicht die Gefahr besteht, daß durch diese Festhaltenase 92 die Schraube in Drehung versetzt wird. Beim Stand der Technik ist diese Gefahr nicht auszuschließen, und zwar dann, wenn der dort dargestellte Schraubenkopf nur auf eine der beiden jeweils vorhandenen vorspringenden Nasen sich abstützt, was vorkommen kann, wenn diese Nasen unterschiedlich weit vorspringen, dies aufgrund von Fertigungstoleranzen.

Statt einer Nase 92, wie vorstehend geschildert, kann man auch in noch günstigerer Weise gemäß Fig. 8 in dem Befestigungsflansch 122 der dort dargestellten Schelle 118 in der Nähe des Kopfes (in Fig. 9 gestrichelt dargestellt) eines Befestigungsbolzens 142, der durch einen Durchbruch 180 im (vom Flansch mit Einschnitt 126 entfernten) anderen Befestigungsflansch 120 hindurchgeführt ist, einen Anschlag vorsehen, und zwar gemäß den Fig. 8 und 9 in Form von zwei Herausdrückungen 95, 96, die symmetrisch zu dem Flanschdurchbruch 180 derart angeordnet sind, daß sie eine Verschiebung der Schelle 118 bezüglich des Befestigungsbolzens 180 (und damit auch eines gegenüberliegenden Befestigungsbolzens, der durch den Einschnitt 126 geführt ist) in Richtung des Durchbruchs 180 wie auch damit in Richtung des Einschnitts 126 bei angezogener Schraube 142 verhindert, und zwar dadurch, daß sich der Kopf 97 des Bolzen 142 mit seinem Rand an die vorspringenden Herausdrückungen 95, 96 anlegt und dadurch eine Verschiebung entlang der Längsachse der Schelle 118 verhindert. Damit kann auch der Bolzen, der in den Einschnitt 126 eingeschoben ist, aus diesem nicht wieder herausgleiten, selbst wenn jetzt der in diesem Einschnitt 126 geführte Bolzen ebenfalls festgeschraubt wird. Insofern erfüllen die beiden Herausdrückungen 95, 96 die gleiche Funktion wie der Vorsprung 92, mit dem Vorteil, daß diese Herausdrückungen weniger störend in Erscheinung treten, insbesondere keine Verletzungsgefahr für den Benutzer beinhalten.

### GEWERBLICHE AUSWERTBARKEIT

Die Erfindung ist in der Heizungstechnik gewerblich auswertbar.

## Patentansprüche

1. Rohrbefestigungseinrichtung (10), bestehend aus einem Sattel (16), einer Schelle (18) und Befestigungsbolzen (30, 42), wobei die Schelle (18) mit Befestigungsflanschen (20, 22) versehen ist, von denen einer (20) einen in einem Flanschseitenrand (24) mündenden Einschnitt (26) zur Aufnahme des Schaftes (28) eines in den Sattel und die Schelle (12) einschraubbaren Befestigungsbolzens (30) aufweist, dadurch gekennzeichnet, daß der andere Befestigungsflansch (22) der Schelle (18) ein erstes Langloch (80) aufweist, daß der Einschnitt (26) ein einseitig offenes zweites Langloch bildet, dessen Ausrichtung (62) derart schräg zur Schellenachse (64) bzw. des zu haltenden Rohrs liegt, daß die Mitte (66) der Einschnittöffnung von der Achse (64) oder einer dazu parallelen Linie durch das erste Langloch (80) einen Abstand aufweist, der um ein Maß A größer ist als der entsprechende Abstand (68) zur Mitte (72) des Endes (74) des Einschnitts (26).

2. Rohrbefestigungseinrichtung nach Anspruch 1, dadurch gekennzeichnet, daß das Ende (74) des Einschnitts (26) halbkreisförmig ist.

3. Rohrbefestigungseinrichtung nach Anspruch 1 oder 2, dadurch gekennzeichnet, daß die Schelle (18) in der Nähe des Kopfes des Befestigungsbolzen (42; 142) einen Anschlag bildet, der eine Verschiebung der Schelle (18) bezüglich des Befestigungsbolzens in Richtung des Langlochs (80; 26) bei angezogener Schraube verhindert.

4. Rohrbefestigungseinrichtung nach Anspruch 3, dadurch gekennzeichnet, daß der Vorsprung von dem Eckbereich (88) zwischen Flansch (22) und Schellenwand bzw. von einem von diesem getragenen sickenförmigen Längsprofil (48) gebildet wird.

5. Rohrbefestigungseinrichtung nach Anspruch 3, dadurch gekennzeichnet, daß der Anschlag (92) für den Bolzenkopf (142) von einer in einem Bereich des zweiten Langlochs angeordneten Herausbiegung (92) gebildet wird.

6. Rohrbefestigungseinrichtung nach einem der Ansprüche 1 bis 5, dadurch gekennzeichnet, daß das Maß A annähernd gleich der Differenz (D) zwischen den Radien (R_{K}, R_{S}) des Kopfes (94) und des Schaftes (28) des Befestigungsbolzens (42) ist.

7. Rohrbefestigungseinrichtung nach Anspruch 1 oder 2, dadurch gekennzeichnet, daß die Schelle (118) in der Nähe des Kopfes (97) eines Befestigungsbolzens (142), der durch einen Durchbruch (180) im vom Flansch (120) mit Einschnitt (126) entfernten anderen Befestigungsflansch (118) hindurchgeführt ist, einen Anschlag (95, 96) derart bildet, daß eine Verschiebung der Schelle (118) bezüglich des Befestigungsbolzens, der durch den Einschnitt (126) geführt ist, in Richtung dieses Einschnitts mit seinen Flanschen (120) verhindert wird.

8. Rohrbefestigungseinrichtung nach Anspruch 7, dadurch gekennzeichnet, daß der Anschlag von einer Herausdrückung im Bereich der Auflagefläche für den Kopf (97) des Befestigungsbolzens (142) gebildet ist.

9. Rohrbefestigungseinrichtung nach Anspruch 7, dadurch gekennzeichnet, daß der Anschlag von zwei Herausdrückungen (95, 96) gebildet wird, die symmetrisch zum Durchbruch 180 des zugehörigen Flansches (118) liegen.

## Claims

1. Pipe fastening arrangement (10), comprising a saddle (16), a clip (18) and a fastening bolt (30, 42), the clip (18) being provided with fastening flanges (20, 22), one (20) of which has a recess (29) for receiving the shank (28) of a fastening bolt (30) adapted to be threaded into the saddle and the clip (12), said recess (26) ending in a lateral flange edge (24), characterized in that the other fastening flange (22) of the clip (18) has a first slot (80), that the recess (26) forms a second slot which is open at one end and the orientation (62) of which is angled relative to the clip axis (64) or the pipe to be retained, that the centre (66) of the recess opening has a distance from the axis (64), or a line parallel thereto, through the first slot (80), which is larger by a dimension A than the corresponding distance (68) to the centre (72) of the end (74) of the recess (26).

2. Pipe fastening arrangement as claimed in Claim 1, characterized in that the end (74) of the recess (26) has a semi-circular configuration.

3. Pipe fastening arrangement as claimed in Claim 1 or 2, characterized in that the clip (18) forms a stop in the vicinity of the head of the fastening bolt (42; 142), which prevents a displacement of the clip (18) with respect to the fastening bolt in the direction of the slot (80; 26) when the bolt is tightened.

4. Pipe fastening arrangement as claimed in Claim 3, characterized in that the projection is formed by the corner area (88) between the flange (22) and the clip wall or by the bead-shaped longitudinal profile (48) supported thereby.

5. Pipe fastening arrangement as claimed in Claim 3, characterized in that the stop (92) for the bolt head (142) is formed by a bent-over portion (92) located in an area of the second slot.

6. Pipe fastening arrangement as claimed in any one of Claims 1 to 5, characterized in that the Dimension A is approximately equal to the difference (D) between the radius (R_{K}, R_{S}) of the head (94) and the shank (28) of the fastening bolt (42).

7. Pipe fastening arrangement as claimed in Claim 1 or 2, characterized in that the clip (118) forms a stop (95, 118) in the vicinity of the head (97) of a fastening bolt (142) which passes through an aperture (180) in the other fastening flange (118) remote from the flange (120) with the recess (126), in such a way that a displacement of the clip (118) in respect to the fastening bolt passing through the recess (126) in the direction of this recess with its flanges (120) is prevented.

8. Pipe fastening arrangement as claimed in Claim 7, characterized in that the stop is formed by a bulging in the region of the support area for the head (97) of the fastening bolt (142).

9. Pipe fastening arrangement as claimed in Claim 7, characterized in that the stop is formed by two bulgings (95, 96) orientated symmetrically relative to the aperture (180) of the associated flange (118).

## Revendications

1. Dispositif de fixation pour tube (10), comprenant une selle (16), un collier (18) et des boulons de fixation (30, 42), dans lequel le collier (18) est pourvu de brides de fixation (20, 22), dont l'une (20) présente une entaille (26) qui débouche dans une bordure latérale (24) de la bride pour recevoir le fût (28) d'un boulon de fixation (30) susceptible d'être vissé dans la selle et dans le collier (12), caractérisé en ce que l'autre bride de fixation (22) du collier (18) comporte un premier perçage oblong (80), en ce que l'entaille (26) forme un second perçage oblong ouvert d'un seul côté, dont l'orientation (62) est disposée en oblique par rapport à l'axe (64) du collier ou du tube à retenir, de telle manière que le milieu (66) de l'ouverture de l'entaille présente, depuis l'axe (64) ou depuis une ligne parallèle à celui-ci à travers le premier perçage oblong (80), une distance qui est supérieure de la valeur A par rapport à la distance correspondante (68) vis-à-vis du milieu (72) de l'extrémité (74) de l'entaille (26).

2. Dispositif de fixation pour tube, selon la revendication 1, caractérisé en ce que l'extrémité (74) de l'entaille (26) est en forme de demi-cercle.

3. Dispositif de fixation selon l'une ou l'autre des revendications 1 et 2, caractérisé en ce que le collier (18) forme à proximité de la tête du boulon de fixation (42 ; 142) une butée qui empêche un déplacement du collier (18) par rapport au boulon de fixation en direction du perçage oblong (80 ; 26) lorsque la vis est serrée.

4. Dispositif de fixation selon la revendication 3, caractérisé en ce que le dépassement est formé par la région de coin (88) entre la bride (22) et la paroi du collier, ou par un profilé longitudinal (48) en forme de soyage porté par celui-ci.

5. Dispositif de fixation selon la revendication 3, caractérisé en ce que la butée (92) pour la tête de boulon (142) est formée par une courbure (92) tournée vers l'extérieur agencée dans la région du second perçage oblong.

6. Dispositif de fixation selon l'une des revendications 1 à 5, caractérisé en ce que la valeur A est approximativement égale à la différence (D) entre les rayons (R_{K}, R_{S}) de la tête (94) et du fût (28) du boulon de fixation (42)

7. Dispositif de fixation selon l'une ou l'autre des revendications 1 et 2, caractérisé en ce que le collier (118) forme, au voisinage de la tête (97) d'un boulon de fixation (142), lequel est passé à travers une traversée (180) dans l'autre bride de fixation (118) éloignée de la bride (120) dotée de l'entaille (126), une butée (95, 96) telle qu'un déplacement du collier (118) par rapport au boulon de fixation, lequel est guidé par l'entaille (126), est empêchée en direction de cette entaille avec ses brides (120).

8. Dispositif de fixation selon la revendication 7, caractérisé en ce que la butée est formée par une bosse dans la région de la surface d'appui pour la tête (97) du boulon de fixation (142).

9. Dispositif de fixation selon la revendication 7, caractérisé en ce que la butée est formée par deux bosses (95, 96) qui sont disposées symétriquement par rapport à la traversée (180) de la bride associée (118).
